# EUROPÄISCHE PATENTANMELDUNG

(11) **EP 4 512 661 A1**
(43) Veröffentlichungstag der Anmeldung: **26.02.2025**
(21) Anmeldenummer: 24195288.6
(22) Anmeldetag: 20.08.2024
(51) Int. Cl.: B60P 3/34, B60P 3/38, E04H 15/06, B60R 3/00

(54) **FREIZEITFAHRZEUG UND AUFSTELLDACH**

(30) Priorität: 25.08.2023 DE 102023122939
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Aufstelldach (2) für Freizeitfahrzeuge (1), insbesondere Wohnmobile und/oder Campervans und/oder auf Hochdachkombis basierenden Freizeitfahrzeugen, mit einem Boden (15), der in einem aufgebauten Zustand auf einem Dach (9) des Freizeitfahrzeugs zumindest mittelbar abstützbar ist, wobei im aufgebauten Zustand ein Teil (16) des Bodens (15) über einen Rand (17) des Daches (9) steht und wobei eine Leiter (18) für einen Aufstieg in einen im aufgebauten Zustand vorgesehenen Innenraum (19) an dem Boden (15) befestigbar ist. Vorgeschlagen wird, dass eine Länge (25) der Leiter (18) einstellbar ist, dass die Leiter (18) mit einer eingestellten Länge (25) arretierbar ist und dass der Teil (16) des Bodens (15) über die arretierte Leiter (18) abstützbar ist. Ferner ist ein Freizeitfahrzeug (1) mit solch einem Aufstelldach (2) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der DE 10 2021 106 143 A1 ist ein Dachzelt für Fahrzeuge bekannt. Das bekannt Dachzelt umfasst einen ersten (oberen) Abdeckungsabschnitt, bestehend aus einer wasserfesten Oberschale und einen zweiten (unteren) Abdeckungsabschnitt, der ein dem oberen Abdeckungsabschnitt identisch großes Bodenelement beinhaltet und mindestens einen äußeren Scharnierverbindungsabschnitt, der den ersten Abdeckungsabschnitt und den zweiten Abdeckungsabschnitt bis auf 180° drehbar verbindet und einen Zeitabschnitt, der mit dem ersten Abdeckungsabschnitt und dem zweiten Abdeckungsabschnitt gekoppelt ist, wobei der untere Abdeckungsabschnitt so vorgesehen ist, dass er fest auf einem Dach einer Trägerkonstruktion montiert ist. Ferner kann im Faltmodus der erste Abdeckungsabschnitt mit dem zweiten Abdeckungsabschnitt ohne zusätzliche wasserdichte Abschnitte kofferartig formschlüssig geschlossen werden. Bei dem bekannten Dachzelt ist eine harte Schale vorgesehen, und es wird eine Verdoppelung der Liegefläche erreicht. Bei dem bekannten Dachzelt sind Stützen zur Stabilisierung des oberen Abdeckelements im Auffaltmodus vorgesehen. Auf der Oberseite des oberen Abdeckungsabschnitts ist eine Befestigungsmöglichkeit für eine Öffnungshilfe obligatorisch. Eine zum Zelt gehörige Leiter kann diese Öffnungshilfe realisieren.

Das aus der DE 10 2021 106 143 A1 bekannte Dachzelt hat den Nachteil, dass eine zusätzliche harte Schale für die Liegefläche erforderlich ist, so dass sich eine aufwändige Ausgestaltung ergibt. Insbesondere ist ein Scharniermechanismus erforderlich. Ein Liegen quer über den Scharniermechanismus ist unbequem, wenn die zusätzliche harte Schale nicht optimal ausgerichtet ist. Des Weiteren setzt ein Liegen entlang des Scharniermechanismus eine entsprechend lange Dachfläche voraus.

Aus der EP 3 464 755 A1 ist ein Fahrzeug mit einem Dachzelt umfassend ein Traggerüst, eine am Traggerüst abgestützte Zelthaut sowie einen Zeltboden bekannt.

Bei dem bekannten Zelt ist der Zeltboden von einem aufblasbaren, im aufgeblasenen Zustand plattenartigen Körper gebildet ist, dessen Deck- und Bodenlage aus einem flexiblen Material bestehen und durch eine Vielzahl von Verbindungsfäden oder Verbindungsfasern miteinander verbunden und im aufgeblasenen Zustand in einem maximalen Normalabstand zueinander gehalten sind.

Das aus der EP 3 464 755 A1 bekannte Dachzelt hat den Nachteil, dass die Ausgestaltung der Bodenlage ein spezielles Material erfordert. Ferner ist bei einem Druckabfall in der Bodenlage die Stabilität insbesondere in einem über ein Fahrzeugdach überstehenden Teil der Bodenlage nicht mehr gewährleistet.

Aufgabe der Erfindung ist es, eine Aufstelldach für ein Freizeitfahrzeug und ein Freizeitfahrzeug anzugeben, die verbessert ausgestaltet sind. Insbesondere ist es eine Aufgabe der Erfindung ein Aufstelldach für ein Freizeitfahrzeug und ein Freizeitfahrzeug anzugeben, bei denen ein guter Liegekomfort auch bei einer begrenzten Dachfläche, insbesondere einer kurzen Dachfläche, erreicht werden kann, wobei eine kostengünstige Ausgestaltung und/oder eine Ausgestaltung mit geringerer Komplexität möglich ist.

Die Aufgabe wird durch eine Aufstelldach mit den Merkmalen des unabhängigen Patentanspruchs 1 und durch ein Freizeitfahrzeug mit den Merkmalen des Patentanspruchs 11 gelöst. Vorteilhafte Weiterbildung der Erfindung sind in den Unteransprüchen angegeben.

Die Aufgabe wird durch ein Aufstelldach für Freizeitfahrzeuge, insbesondere Wohnmobile und/oder Campervans und/oder auf Hochdachkombis basierenden Freizeitfahrzeugen, mit einem Boden, der in einem aufgebauten Zustand auf einem Dach des Freizeitfahrzeugs zumindest mittelbar abstützbar ist, gelöst, wobei im aufgebauten Zustand ein Teil des Bodens über einen Rand des Daches steht, wobei eine Leiter für einen Aufstieg in einen im aufgebauten Zustand vorgesehenen Innenraum an dem Boden befestigbar ist, wobei eine Länge der Leiter einstellbar ist, wobei die Leiter mit einer eingestellten Länge arretierbar ist und wobei der Teil des Bodens über die arretierte Leiter abstützbar ist.

Ferner wird die Aufgabe durch ein Freizeitfahrzeug, insbesondere ein Wohnmobil und/oder einen Campervan und/oder ein auf einem Hochdachkombi basierendes Freizeitfahrzeug, mit einem solchen Aufstelldach gelöst.

Das Dach des Freizeitfahrzeugs ist nicht notwendigerweise ein Bestandteil des erfindungsgemäßen Aufstelldachs. Insbesondere kann das Aufstelldach auch unabhängig von einem Freizeitfahrzeug hergestellt und vertrieben werden.

Die Leiter kann für die Funktion einer Abstützung als faltbare Leiter oder einbeziehungsweise ausziehbare Leiter ausgestaltet sein. Die Leiter kann als Stütze arretierbar sein.

Vorteilhaft ist es, dass die Leiter im aufgebauten Zustand auf einem Untergrund neben dem Freizeitfahrzeug steht und dass der Teil des Bodens über die arretierte Leiter an dem Untergrund abstützbar ist. Durch die Einstellung der Länge ist hierbei eine Anpassung an einen nicht ebenen Untergrund möglich.

Vorteilhaft ist es, dass die Leiter als variabel und/oder in Schritten ausziehbare Leiter ausgebildet ist. Beispielsweise können eindrückbare Elemente mit Kugelkopf in geeignete Bohrungen eingreifen, so dass eine Verstellung in Schritten möglich ist. Zusätzlich oder alternativ kann zumindest eine Arretierung vorgesehen sein, die Beispielsweise ein Längsprofil einklemmt, um die Leiter bei eingestellter Länge zu arretieren.

Vorteilhaft ist es, dass eine Dachschale vorgesehen ist und dass die Dachschale im aufgebauten Zustand zumindest teilweise eine zumindest näherungsweise entlang einer Fahrzeugseite angeordnete Rückwand bildet, die den Innenraum begrenzt. Somit wird eine hohe Stabilität gewährleistet und zugleich kann das Gewicht der Dachschale über das Dach des Freizeitfahrzeugs abgestützt werden.

Vorteilhaft ist es, dass eine Zugangsöffnung in den Innenraum vorgesehen ist und der Aufstieg über die Leiter durch die Zugangsöffnung in den Innenraum erfolgt und dass die Zugangsöffnung gegenüberliegend zu der durch die Dachschale gebildeten Rückwand angeordnet ist. Hierdurch kann in vorteilhafterweise ein Aufbau erfolgen, der quer zu einer Längsrichtung des Fahrzeugs ein Überstehen des Bodens ermöglicht. Dann können beispielsweise zwei Personen quer zur Längsrichtung schlafen.

Vorteilhaft ist es, dass zumindest eine aufblasbare Seitenwandstabilisierung vorgesehen ist, die im aufgebauten Zustand zumindest teilweise an einem Fenster, insbesondere einem Netzfenster, entlang läuft. Hierdurch ist eine zusätzliche Versteifung möglich.

Vorteilhaft ist es, dass sich die Seitenwandstabilisierung zumindest im Wesentlichen über einen überstehenden Bereich einer Seitenwand, der über dem überstehenden Teil des Bodens angeordnet ist, und vorzugsweise zumindest teilweise über einen Dachbereich der Seitenwand, der über dem Dach des Freizeitfahrzeugs angeordnet ist, erstreckt. Hierdurch wird die Stabilität der Anordnung verbessert. Insbesondere kann eine bessere Stabilität bei Wind ermöglicht werden.

Vorteilhaft ist es, dass die Seitenwandstabilisierung an einer Seitenwand vorgesehen ist und dass eine weitere aufblasbare Seitenwandstabilisierung vorgesehen ist, die an einer der Seitenwand gegenüberliegenden weiteren Seitenwand vorgesehen ist. Dadurch kann insbesondere eine symmetrisch ausgestaltete Stabilisierung realisiert werden.

Vorteilhaft ist es, dass ein aufblasbarer dachseitiger Stützbogen vorgesehen ist, der zumindest im Wesentlichen über dem Dach des Freizeitfahrzeugs Seitenwände und ein Zeltdach aufspannt, und/oder dass ein aufblasbarer dachferner Stützbogen vorgesehen ist, der zumindest im Wesentlichen über dem überstehenden Teil des Bodens des Freizeitfahrzeugs Seitenwände und ein Zeltdach aufspannt und vorzugsweise eine Zugangsöffnung bogenförmig umfasst. Dadurch kann insbesondere eine Stabilität im Abstützbereich an und über der Leiter verbessert werden. Ferner kann eine Stabilität im Bereich des Daches des Freizeitfahrzeugs verbessert werden. Außerdem kann das Zeltdach wesentlich stabilisiert werden.

Vorteilhaft ist es, dass der dachseitige Stützbogen und/oder der dachferne Stützbogen zumindest im Wesentlichen unterbrechungsfrei an zumindest eine aufblasbare Seitenwandstabilisierung angrenzen und/oder mit zumindest einer aufblasbaren Seitenwandstabilisierung verbunden sind. Beispielsweise kann eine aufblasbare Struktur gebildet werden, die die Seitenwandstabilisierungen und die Stützbögen umfasst.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einem Aufstelldach entsprechend einem Ausführungsbeispiel in einer schematischen, räumlichen Darstellung, wobei eine Ansicht von seitlich vorne bei geschlossenem Aufstelldach gezeigt ist;
- Fig. 2: das in Fig. 1 gezeigte Freizeitfahrzeug, wobei das Aufstelldach aufgebaut ist;
- Fig. 3: das in Fig. 2 gezeigte Freizeitfahrzeug aus der mit III bezeichneten Blickrichtung und
- Fig. 4: einen Innenraum des aufgebauten Aufstelldachs.

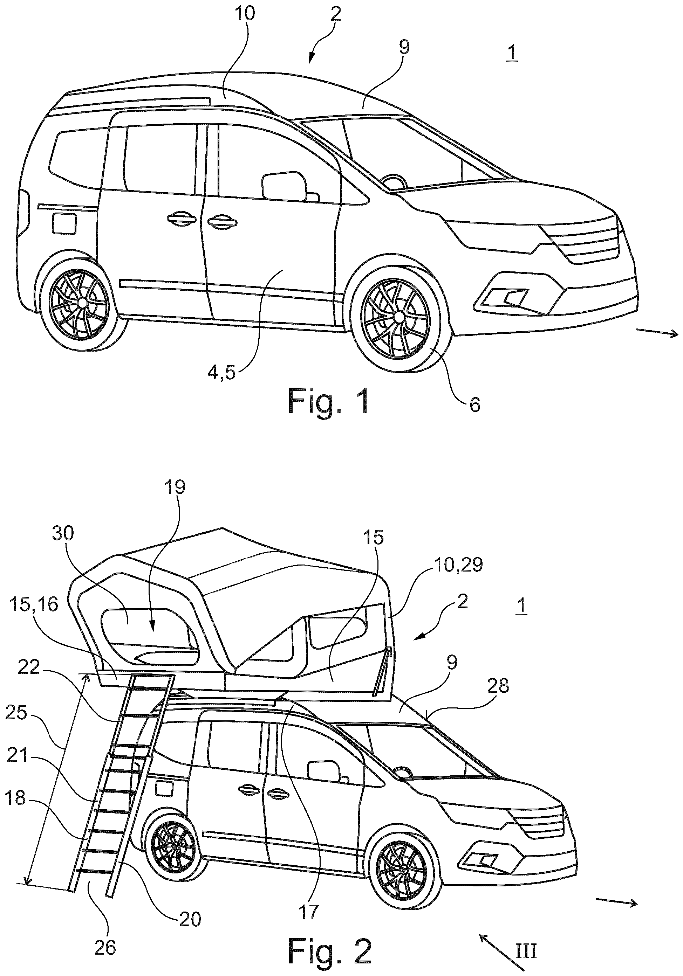

Fig. 1 zeigt ein Freizeitfahrzeug 1 mit einem Aufstelldach 2 entsprechend einem Ausführungsbeispiel in einer schematischen, räumlichen Darstellung, wobei eine Ansicht von seitlich vorne bei geschlossenem Aufstelldach 2 gezeigt ist. Das Freizeitfahrzeuge 1 kann insbesondere als Wohnmobil und/oder Campervan und/oder auf einem Hochdachkombi basierendes Freizeitfahrzeug 1 ausgebildet sein.

Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, ein Fahrwerk 6, die Sitze 7 der ersten Reihe und die Rückbank 8 oder Einzelsitze im Fond übernommen. Die Heckklappe ist vorzugsweise die Heckklappe des Basisfahrzeugs 4.

Allerdings können geeignete Modifikationen vorgesehen sein, die beispielsweise ein Dach 9 des Freizeitfahrzeugs 1 betreffen können. Beispielsweise kann in dem Dach 9 ein Dachausschnitt (nicht dargestellt) vorgesehen sein. Das Dach 9 ist dann bei geschlossenem Aufstelldach 2 durch eine Dachschale 10 des Aufstelldaches 2 geschlossen. In diesem Ausführungsbeispiel ist aber kein Dachausschnitt erforderlich.

Das Dach 9 kann in einer Längsrichtung 11 des Freizeitfahrzeugs 1 betrachtet relativ kurz sein. Speziell kann das Dach 9 in der Längsrichtung 11 zu kurz sein, um für eine erwachsen Person eine Liegen in der Längsrichtung 11 im ausgestreckten Zustand zu ermöglichen. Bei dem bevorzugten Ausführungsbeispiel können insbesondere zwei Personen quer zur Längsrichtung 11 liegen beziehungsweise schlafen.

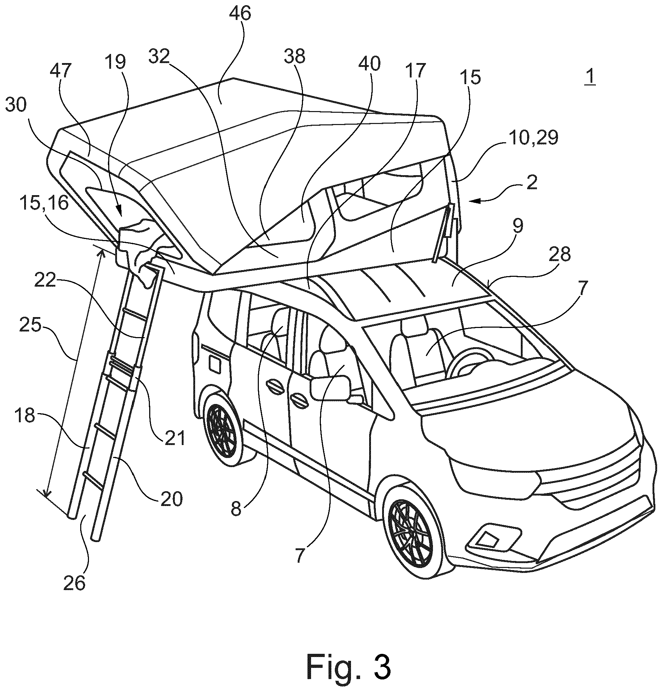

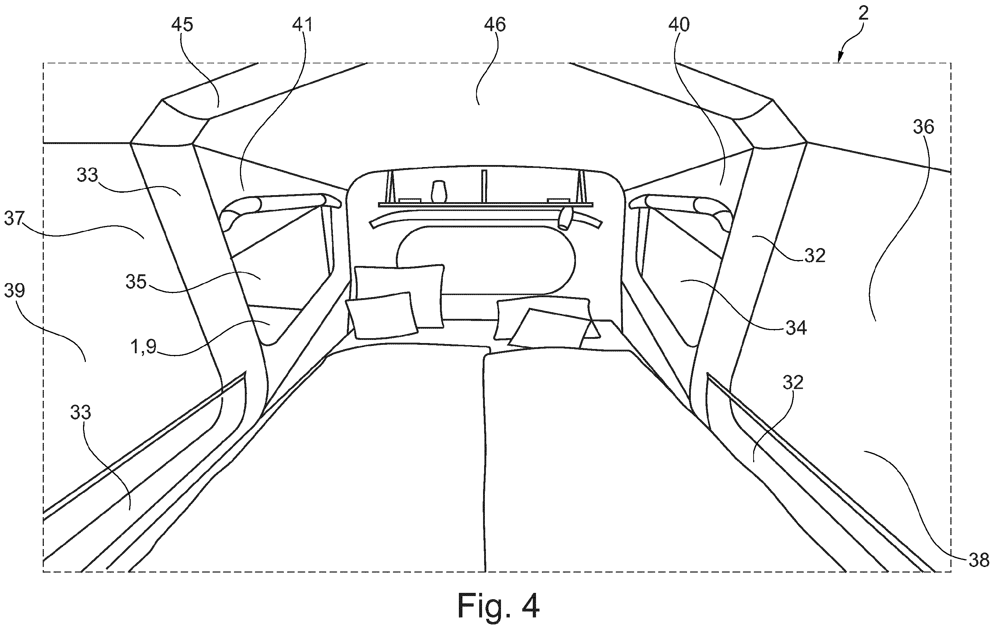

Fig. 2 zeigt das in Fig. 1 gezeigte Freizeitfahrzeug 1, wobei das Aufstelldach 2 aufgebaut ist. Ferner zeigt Fig. 3 das in Fig. 2 gezeigte Freizeitfahrzeug 1 aus der mit III bezeichneten Blickrichtung. Außerdem zeigt Fig. 4 einen Innenraum des aufgebauten Aufstelldachs 2.

Das Aufstelldach 2 weist einen Boden 15 auf, der in dem aufgebauten Zustand auf einem Dach 9 des Freizeitfahrzeugs abgestützt ist. Ferner steht im aufgebauten Zustand ein Teil 16 des Bodens 15 über einen Rand 17 des Daches 9 hinaus.

Der Boden 15 ist nicht notwendigerweise selbstversteifend ausgeführt. Insbesondere kann der Boden 15 nicht selbstversteifend ausgeführt sein. Die Abstützung des Bodens 15 kann nicht durch den Boden 15 selbst, sondern zumindest im Wesentlichen durch die Leiter 18 erfolgen.

Das Aufstelldach 2 weist eine Leiter 18 auf, die für einen Aufstieg in einen Innenraum 19 des Aufstelldaches 2 dient. Die Leiter 18 ist hierfür an dem Boden 15 befestigt. Die Leiter 18 weist in diesem Ausführungsbeispiel mehrere Leiterteile 20, 21, 22 auf. Eine Länge 25 der Leiter 18 ist von einem Benutzer einstellbar. Hierfür können in diesem Ausführungsbeispiel die Leiterteile 20, 21, 22, die teilweise ineinandergeschoben sind, von einem Benutzer mehr oder weniger weit ineinander geschoben werden, so dass sich die Länge 25 ändern lässt. Die Leiter 18 kann dann mit der eingestellten Länge 25 von dem Benutzer arretiert werden. Die Leiter 18 kann variabel und/oder in Schritten ein- und ausziehbar sein. Dadurch ist eine komfortable Handhabung möglich.

Die Leiter 18 steht im aufgebauten Zustand auf einem Untergrund 26 neben dem Freizeitfahrzeug 1. Die Leiter 18, die an dem Boden 15 befestigt ist, stützt dann den Teil 16 des Bodens 15 über die arretierte Leiter 18 an dem Untergrund 26 ab. Somit dient die Leiter 18 zum einen für den Aufstieg und zum anderen zum Abstützens des Bodens 15.

Die Dachschale 10 bildet im hochgeklappten Zustand eine entlang einer Fahrzeugseite 28 angeordnete Rückwand 29. Die Rückwand begrenzt den Innenraum 19 des Aufstelldachs 2. Über dem Teil 16 des Bodens 15 ist eine Zugangsöffnung 30 in den Innenraum 19 vorgesehen. Der Aufstieg über die Leiter 18 führt durch die Zugangsöffnung 30 in den Innenraum 19. Die Zugangsöffnung 30 liegt der durch die Dachschale 10 gebildeten Rückwand 29 gegenüber.

Ferner sind aufblasbare Seitenwandstabilisierungen 32, 33 vorgesehen, die im aufgebauten Zustand an Fenstern 34, 35, die als Netzfenster 34, 35 ausgeführt sein können, entlang laufen. Die Seitenwandstabilisierungen 32, 33 erstrecken sich über überstehende Bereiche 38, 39 der Seitenwände 36, 37, die über dem überstehenden Teil 16 des Bodens 15 angeordnet sind. Außerdem erstrecken sich die Seitenwandstabilisierungen 32, 33 teilweise über Dachbereiche 40, 41 der Seitenwände 36, 37, die über dem Dach 9 des Freizeitfahrzeugs 1 angeordnet sind.

Außerdem ist ein aufblasbarer dachseitiger Stützbogen 45 vorgesehen. Der dachseitige Stützbogen 45 spannt über dem Dach 9 des Freizeitfahrzeugs 1 die Seitenwände 36, 37 und ein Zeltdach 46 des Aufstelldaches 2 auf. Ferner ist ein aufblasbarer dachferner Stützbogen 47 vorgesehen. Der dachferne Stützbogen 47 spannt über dem überstehenden Teil 16 des Bodens 15 des Freizeitfahrzeugs 1 die Seitenwände 36, 37 und das Zeltdach 46 auf. In diesem Ausführungsbeispiel ist der dachferne Stützbogen so angeordnet und ausgestaltet, dass er die Zugangsöffnung 30 bogenförmig umfasst.

Die Seitenwandstabilisierungen 32, 33 stabilisieren die Seitenwände 36, 37 im Übergang vom jeweiligen Dachbereich 40, 41 zum überstehenden Bereich 38, 39.

Der dachseitige Stützbogen 45 und der dachferne Stützbogen 47 sowie die aufblasbaren Seitenwandstabilisierungen 32, 33 können mit einer Gesamtkammer oder unterteilt mit mehreren Kammern ausgebildet sein. Ferner können auch separierte Ausgestaltungen realisiert sein, wobei vorzugsweise kein wesentlicher Abstand zwischen den einzelnen Kammern vorgesehen ist. Ferner können der dachseitige Stützbogen 45 und/oder der dachferne Stützbogen 47 und/oder die aufblasbaren Seitenwandstabilisierungen 32, 33 auch als selbstversteifende Elemente ausgebildet sein.

Die Erfindung ist nicht auf die beschriebenen Ausführungsformen beschränkt.

## Patentansprüche

1. Aufstelldach (2) für Freizeitfahrzeuge (1), insbesondere Wohnmobile und/oder Campervans und/oder auf Hochdachkombis basierenden Freizeitfahrzeugen, mit einem Boden (15), der in einem aufgebauten Zustand auf einem Dach (9) des Freizeitfahrzeugs zumindest mittelbar abstützbar ist, wobei im aufgebauten Zustand ein Teil (16) des Bodens (15) über einen Rand (17) des Daches (9) steht und wobei eine Leiter (18) für einen Aufstieg in einen im aufgebauten Zustand vorgesehenen Innenraum (19) an dem Boden (15) befestigbar ist,
**dadurch gekennzeichnet,**
**dass** eine Länge (25) der Leiter (18) einstellbar ist, dass die Leiter (18) mit einer eingestellten Länge (25) arretierbar ist und dass der Teil (16) des Bodens (15) über die arretierte Leiter (18) abstützbar ist.

2. Aufstelldach nach Anspruch 1,
**dadurch gekennzeichnet,**
**dass** die Leiter (18) im aufgebauten Zustand auf einem Untergrund (26) neben dem Freizeitfahrzeug (1) steht und dass der Teil (16) des Bodens (15) über die arretierte Leiter (18) an dem Untergrund (26) abstützbar ist.

3. Aufstelldach nach einem der vorhergehenden Ansprüche,
**dadurch gekennzeichnet,**
**dass** die Leiter (18) als variabel und/oder in Schritten ausziehbare Leiter (18) ausgebildet ist.

4. Aufstelldach nach einem der vorhergehenden Ansprüche,
**dadurch gekennzeichnet,**
**dass** eine Dachschale (10) vorgesehen ist und dass die Dachschale (10) im aufgebauten Zustand zumindest teilweise eine zumindest näherungsweise entlang einer Fahrzeugseite (28) angeordnete Rückwand (29) bildet, die den Innenraum (19) begrenzt.

5. Aufstelldach nach Anspruch 4,
**dadurch gekennzeichnet,**
**dass** eine Zugangsöffnung (30) in den Innenraum (19) vorgesehen ist und der Aufstieg über die Leiter (18) durch die Zugangsöffnung (30) in den Innenraum (19) erfolgt und dass die Zugangsöffnung (30) gegenüberliegend zu der durch die Dachschale (10) gebildeten Rückwand (29) angeordnet ist.

6. Aufstelldach nach einem der vorhergehenden Ansprüche ,
**dadurch gekennzeichnet,**
**dass** zumindest eine aufblasbarer Seitenwandstabilisierung (32, 33) vorgesehen ist, die im aufgebauten Zustand zumindest teilweise an einem Fenster (34, 35), insbesondere einem Netzfenster (34, 35), entlang läuft.

7. Aufstelldach nach Anspruch 6,
**dadurch gekennzeichnet,**
**dass** sich die Seitenwandstabilisierung (32, 33) zumindest im Wesentlichen über einen überstehenden Bereich (38, 39) einer Seitenwand (36, 37), der über dem überstehenden Teil (16) des Bodens (15) angeordnet ist, und vorzugsweise zumindest teilweise über einen Dachbereich (40, 41) der Seitenwand (36, 37), der über dem Dach (9) des Freizeitfahrzeugs (1) angeordnet ist, erstreckt.

8. Aufstelldach nach Anspruch 6 oder 7,
**dadurch gekennzeichnet,**
**dass** die Seitenwandstabilisierung (32, 33) an einer Seitenwand (36, 37) vorgesehen ist und dass eine weitere aufblasbare Seitenwandstabilisierung (32, 33) vorgesehen ist, die an einer der Seitenwand (36, 37) gegenüberliegenden weiteren Seitenwand (36, 37) vorgesehen ist.

9. Aufstelldach nach einem der vorhergehenden Ansprüche,
**dadurch gekennzeichnet,**
**dass** ein aufblasbarer dachseitiger Stützbogen (45) vorgesehen ist, der zumindest im Wesentlichen über dem Dach (9) des Freizeitfahrzeugs (1) Seitenwände (36, 37) und ein Zeltdach (46) aufspannt, und/oder dass ein aufblasbarer dachferner Stützbogen (47) vorgesehen ist, der zumindest im Wesentlichen über dem überstehenden Teil (16) des Bodens (15) des Freizeitfahrzeugs (1) Seitenwände (36, 37) und ein Zeltdach (46) aufspannt und vorzugsweise eine Zugangsöffnung (30) bogenförmig umfasst.

10. Aufstelldach nach Anspruch 9,
**dadurch gekennzeichnet,**
**dass** der dachseitige Stützbogen (45) und/oder der dachferne Stützbogen (47) zumindest im Wesentlichen unterbrechungsfrei an zumindest eine aufblasbare Seitenwandstabilisierung (32, 33) angrenzen und/oder mit zumindest einer aufblasbaren Seitenwandstabilisierung (32, 33) verbunden sind.

11. Freizeitfahrzeug (1), insbesondere Wohnmobil und/oder Campervan und/oder auf einem Hochdachkombi basierenden Freizeitfahrzeug, mit einem Aufstelldach (2) nach einem der Ansprüche 1 bis 10.
